# EUROPEAN PATENT APPLICATION

(11) **EP 1 627 936 A2**
(43) Date of publication of application: **22.02.2006**
(21) Application number: 05254896.3
(22) Date of filing: 05.08.2005
(51) Int. Cl.: C23C 28/00, C23C 4/08, C23C 4/10

(54) **Article protected by a strong local coating**

(30) Priority: 20.08.2004 US 922527
(71) Applicant: GENERAL ELECTRIC COMPANY, Schenectady, New York 12345 (US)
(72) Inventor: Darolia, Ramgopal, West Chester, Ohio 45069 (US); Rigney, Joseph David, Milford, Ohio 45150 (US); Gorman, Mark Daniel, West Chester, Ohio 45069 (US)
(74) Representative: Goode, Ian Roy

(57) **Abstract**

A protected article includes a substrate (50) having a surface (52) and a substrate (50) aluminum content. A first protective layer (54) overlies a first region (40) of the surface (52) of the substrate (50), wherein the first protective layer (54) has a composition having a first-protective-layer aluminum content at least 3 atomic percent greater than the substrate (50) aluminum content. A second protective layer (58) overlies a second region (42) of the surface (52) of the substrate (50) different from the first region (40), wherein the second protective layer (58) has a composition with at least about 60 percent by weight of platinum, rhodium, or palladium, and combinations thereof.

## Description

This invention relates to the surface protection of articles that are used in a high-temperature oxidative environment and, more particularly, to the surface protection of gas turbine components.

In an aircraft gas turbine (jet) engine, air is drawn into the front of the engine, compressed by a shaft-mounted compressor, and mixed with fuel. The mixture is burned, and the hot exhaust gases are passed through a turbine mounted on the same shaft. The flow of combustion gas turns the turbine by impingement against an airfoil section of the turbine blades and vanes, which turns the shaft and provides power to the compressor and fan. In a more complex version of the gas turbine engine, the compressor and a high pressure turbine are mounted on one shaft, and the fan and low pressure turbine are mounted on a separate shaft. The hot exhaust gases flow from the back of the engine, driving it and the aircraft forward.

The hotter the combustion and exhaust gases, the more efficient is the operation of the jet engine. There is thus an incentive to raise the combustion and exhaust-gas temperatures. The maximum temperature of the combustion gases is normally limited by the materials used to fabricate the turbine vanes and turbine blades of the turbine, upon which the hot combustion gases impinge. In current engines, the turbine vanes and blades are made of nickel-based superalloys, and can operate at temperatures of up to about 1900-2150°F.

Many approaches have been used to increase the operating temperature limits of turbine blades, turbine vanes, and other hot-section components to their current levels. For example, the composition and processing of the base materials themselves have been improved, and a variety of solidification techniques have been developed to take advantage of oriented grain structures and single-crystal structures. Physical cooling techniques may also be used.

In yet another approach, coatings are applied to the surface of the substrate to inhibit the oxidation of the substrate, thereby permitting the substrate material to be used at a higher temperature than would otherwise be possible. The most widely used coatings are aluminum-rich layers whose surfaces oxidize to an aluminum oxide scale to inhibit further oxidation. The aluminum-rich layer may serve as either an environmental coating or as a bond coat under a ceramic thermal barrier coating. Other types of coatings have also been used, although with less-satisfactory results.

Protective layers continue to be used to protect substrates, but there is always a need for further improvements to increase the operating temperatures of the coated substrates and to prolong their service lives. The present invention fulfills this need, and further provides related advantages.

The present invention provides a protected article that is protected with different coatings in different areas of its surface. The areas that are subjected to the most severe conditions are protected by a strengthened protective coating that resists the rumpling or roughening that can otherwise lead to premature failure of the coating, while other areas are protected by a less costly coating.

A protected article comprises a substrate having a surface and a substrate aluminum content, and a first protective layer overlying a first region of the surface of the substrate. The first protective layer has a composition with a first-protective-layer aluminum content greater than a substrate aluminum content, preferably at least 3 atomic percent greater than the substrate aluminum content, and is typically a diffusion aluminide or aluminum-containing overlay. There is a second protective layer overlying a second region of the surface of the substrate different from the first region. The second protective layer has a composition having at least about 60 percent by weight of platinum, rhodium, palladium, or combinations thereof. Optionally, a ceramic thermal barrier coating overlies at least some of the first protective layer or the second protective layer.

The substrate is preferably a nickel-base alloy, and most preferably a nickel-base superalloy. The substrate may be in the form of an airfoil, such as that found on a turbine blade or turbine vane. In that case, the second region is preferably a trailing edge, a leading edge, or a tip of the airfoil. The first region may be the remainder of the airfoil.

There may be a diffusion-barrier layer between the surface of the substrate and the second protective layer. The preferred diffusion-barrier layer comprises at least about 50 percent by weight of an element selected from the group consisting of rhenium, iridium, ruthenium, tungsten, and combinations thereof.

The second protective layer may be pure platinum, rhodium, palladium, or a combination of these elements. The second protective layer may be an alloy of one or more of platinum, rhodium, and palladium with other elements, such as iridium, nickel, chromium, aluminum, zirconium, hafnium, tantalum, rhenium, or ruthenium, or combinations thereof. The other elements are present up to a total of not more than about 40 percent by weight of the second protective layer. Depending upon the presence, thickness, and nature of the diffusion-barrier layer, the second protective layer may be an alloy including elements interdiffused into the second protective layer from the substrate. Thus, for example, the second protective layer may be an alloy of the initial, as-deposited elements of the second protective layer and elements interdiffused into the second protective layer from the substrate by heat treating for a time of at least 1 hour and at a temperature of at least 1850°F.

The first protective layer and the second protective layer do not overlie each other, except possibly for minor incidental overlap along their lateral edges. The two protective layers are instead positioned to protect laterally separated areas of the surface of the protected article. The mechanical strength of the second protective layer is significantly greater than that of the first protective layer at typical service temperatures. The second protective layer is therefore used in regions where there is a likelihood of rumpling (roughening) of a weaker protective layer, as a result of differences in the thermal expansion coefficients of the high-aluminum protective-layer thermally grown oxide and the substrate. Such regions include, for example, trailing edges, leading edges, and tips of the airfoils of turbine blades and vanes. The rumpling, when it occurs, accelerates the failure of the protective coating. High-aluminum protective layers are insufficiently strong to resist this rumpling of the surface. The platinum-group-metal-based second protective layer of the present approach is both resistant to oxidation and corrosion, the basic requirement of such a protective layer, and is also relatively strong to resist rumpling. The material of the second protective layer is, however, significantly more costly and heavier than the material of the first protective layer, and it is therefore preferably used only where its improved properties are needed. For this reason, the second protective layer is applied only to the areas that otherwise suffer the greatest damage in service, and the first protective layer is used elsewhere. A ceramic thermal barrier coating may be applied over either the first protective layer or the second protective layer.

Other features and advantages of the present invention will be apparent from the following more detailed description of the preferred embodiment, taken in conjunction with the accompanying drawings, which illustrate, by way of example, the principles of the invention, and in which:
Figure 1 is a perspective view of a turbine blade;
Figure 2 is an elevational view of the turbine blade of Figure 1;
Figure 3 is a sectional view through the turbine blade of Figure 2, taken on line 3-3;
Figure 4 is an enlarged schematic sectional view through the turbine blade of Figure 3, taken on line 4-4, illustrating a first embodiment of the first protective layer;
Figure 5 is an enlarged schematic sectional view through the turbine blade of Figure 3, taken on line 4-4, illustrating a second embodiment of the first protective layer;
Figure 6 is an enlarged schematic sectional view through the turbine blade of Figure 3, taken on line 6-6, illustrating a first embodiment of the second protective layer; and
Figure 7 is an enlarged schematic sectional view through the turbine blade of Figure 3, taken on line 6-6, illustrating a second embodiment of the second protective layer.

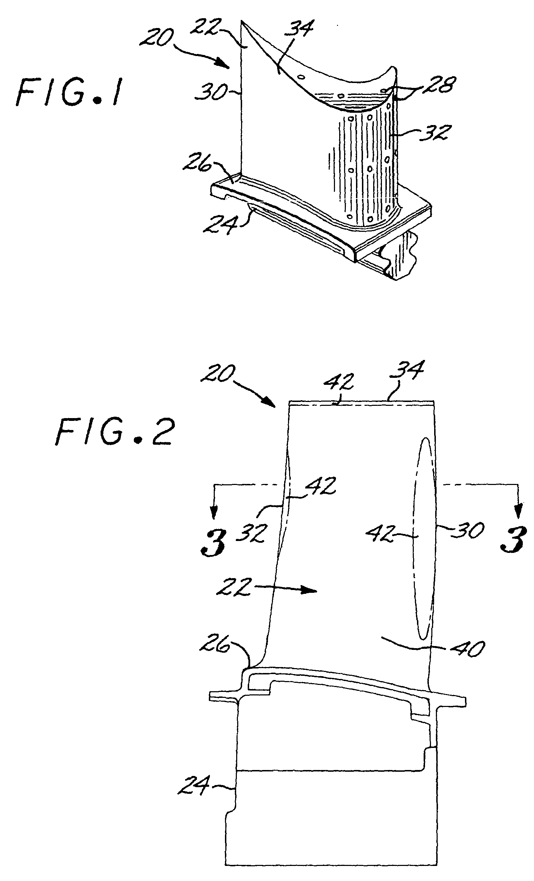

Figure 1 depicts a component article of a gas turbine engine such as a turbine blade or turbine vane, and in this illustration a turbine blade 20. The turbine blade 20 includes an airfoil 22 against which the flow of hot exhaust gas is directed. (The turbine vane has a similar appearance in respect to the pertinent airfoil portion.) Preferably at least the airfoil 22, and more preferably the entire turbine blade 20, is substantially single crystal. That is, there are substantially no grain boundaries in the single crystal portion, and the crystallographic orientation is the same throughout. The term "substantially single crystal" means that virtually the entire article is a single crystal, although there may be some incidental small regions having other crystalline orientations present. Even a substantially single crystal article typically has a number of low-angle grain boundaries present, and these are permitted within the scope of the term "substantially single crystal". However, the present approach is operable with polycrystal or oriented crystal microstructures as well.

The turbine blade 20 is mounted to a turbine disk (not shown) by a dovetail 24 which extends downwardly from the airfoil 22 and engages a slot on the turbine disk. A platform 26 extends longitudinally outwardly from the area where the airfoil 22 is joined to the dovetail 24. In some articles, a number of optional cooling channels extend through the interior of the airfoil 22, ending in openings 28 in the surface of the airfoil 22. A flow of cooling air is directed through the cooling channels, to reduce the temperature of the airfoil 22.

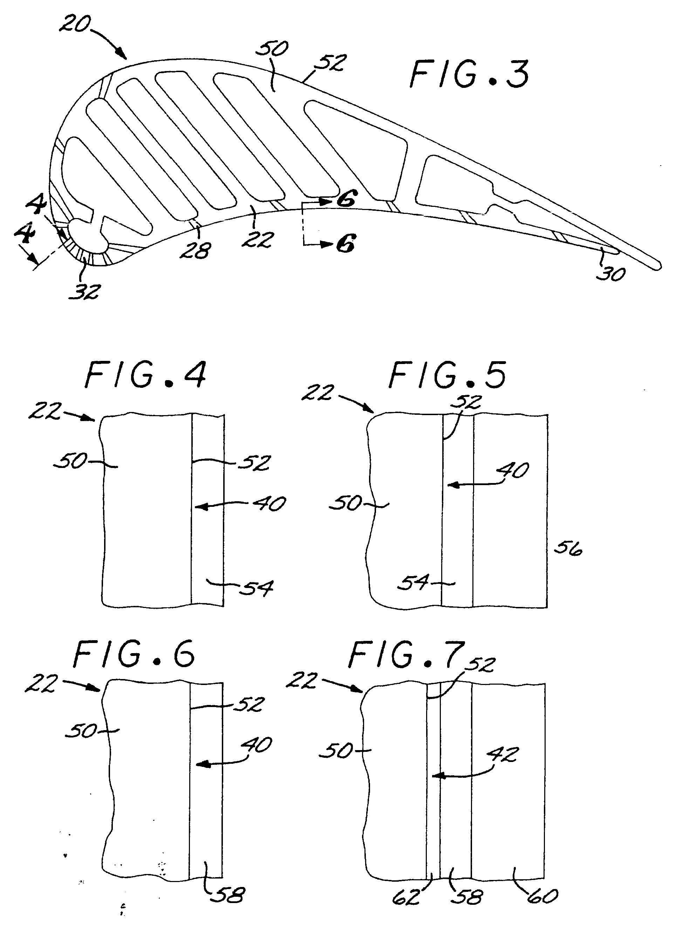

During service, the airfoil 22 is contacted by the hot combustion gas produced by burning the mixture of the jet fuel and air. The contact of the hot combustion gas to the airfoil, in conditions of elevated temperature and thermal variations and cycling, produces damage to the underlying metallic substrate of the airfoil 22. To protect the metallic substrate against this damage, an elevated-aluminum coating may be applied to the surface of the metallic substrate. However, not all portions of the airfoil 22 are damaged in the same manner and to the same degree of severity. As depicted in Figures 2 and 3, some specific local portions of the airfoil, most notably a trailing edge 30, a leading edge 32, and/or a tip 34, are observed to be susceptible to a rumpling or roughening of the elevated-aluminum coating, which in turn may lead to accelerated failure of the elevated-aluminum coating and premature failure of the airfoil in these locations.

According to the present approach, the airfoil 22 (or other damage-susceptible structure) is viewed as having two regions, a first region 40 where the potential damage is less severe, and a second region 42 where the potential damage is more severe. In the case of interest here and described in the preceding paragraph, the second region 42 includes the trailing edge 30, the leading edge 32, and/or the tip 34. The first region 40 includes the remainder of the airfoil 22.

The protected article, here the airfoil 22, comprises a substrate 50 having a surface 52 and a substrate aluminum content. The article is most preferably made of a nickel-base superalloy. As used herein, "nickel-base" means that the composition has more nickel present than any other element. The nickel-base superalloys are of a composition that is strengthened by the precipitation of gamma-prime phase or a related phase. The nickel-base alloy preferably has a composition, in weight percent, of from about 4 to about 20 percent cobalt, from about 1 to about 10 percent chromium, from about 5 to about 7 percent aluminum, from 0 to about 2 percent molybdenum, from about 3 to about 8 percent tungsten, from about 4 to about 12 percent tantalum, from 0 to about 2 percent titanium, from 0 to about 8 percent rhenium, from 0 to about 6 percent ruthenium, from 0 to about 1 percent niobium, from 0 to about 0.1 percent carbon, from 0 to about 0.01 percent boron, from 0 to about 0.1 percent yttrium, from 0 to about 1.5 percent hafnium, balance nickel and incidental impurities.

A most preferred alloy composition is Rene' N5, which has a nominal composition in weight percent of about 7.5 percent cobalt, about 7 percent chromium, about 6.2 percent aluminum, about 6.5 percent tantalum, about 5 percent tungsten, about 1.5 percent molybdenum, about 3 percent rhenium, about 0.05 percent carbon, about 0.004 percent boron, about 0.15 percent hafnium, up to about 0.01 percent yttrium, balance nickel and incidental impurities. Other operable superalloys include, for example, Rene' N6, which has a nominal composition in weight percent of about 12.5 percent cobalt, about 4.2 percent chromium, about 1.4 percent molybdenum, about 5.75 percent tungsten, about 5.4 percent rhenium, about 7.2 percent tantalum, about 5.75 percent aluminum, about 0.15 percent hafnium, about 0.05 percent carbon, about 0.004 percent boron, about 0.01 percent yttrium, balance nickel and incidental impurities; Rene 142, which has a nominal composition, in weight percent, of about 12 percent cobalt, about 6.8 percent chromium, about 1.5 percent molybdenum, about 4.9 percent tungsten, about 6.4 percent tantalum, about 6.2 percent aluminum, about 2.8 percent rhenium, about 1.5 percent hafnium, about 0.1 percent carbon, about 0.015 percent boron, balance nickel and incidental impurities; CMSX-4, which has a nominal composition in weight percent of about 9.60 percent cobalt, about 6.6 percent chromium, about 0.60 percent molybdenum, about 6.4 percent tungsten, about 3.0 percent rhenium, about 6.5 percent tantalum, about 5.6 percent aluminum, about 1.0 percent titanium, about 0.10 percent hafnium, balance nickel and incidental impurities; CMSX-10, which has a nominal composition in weight percent of about 7.00 percent cobalt, about 2.65 percent chromium, about 0.60 percent molybdenum, about 6.40 percent tungsten, about 5.50 percent rhenium, about 7.5 percent tantalum, about 5.80 percent aluminum, about 0.80 percent titanium, about 0.06 percent hafnium, about 0.4 percent niobium, balance nickel and incidental impurities; PWA1480, which has a nominal composition in weight percent of about 5.00 percent cobalt, about 10.0 percent chromium, about 4.00 percent tungsten, about 12.0 percent tantalum, about 5.00 percent aluminum, about 1.5 percent titanium, balance nickel and incidental impurities; PWA1484, which has a nominal composition in weight percent of about 10.00 percent cobalt, about 5.00 percent chromium, about 2.00 percent molybdenum, about 6.00 percent tungsten, about 3.00 percent rhenium, about 8.70 percent tantalum, about 5.60 percent aluminum, about 0.10 percent hafnium, balance nickel and incidental impurities; and MX-4, which has a nominal composition as set forth in US Patent 5,482,789, in weight percent, of from about 0.4 to about 6.5 percent ruthenium, from about 4.5 to about 5.75 percent rhenium, from about 5.8 to about 10.7 percent tantalum, from about 4.25 to about 17.0 percent cobalt, from 0 to about 0.05 percent hafnium, from 0 to about 0.06 percent carbon, from 0 to about 0.01 percent boron, from 0 to about 0.02 percent yttrium, from about 0.9 to about 2.0 percent molybdenum, from about 1.25 to about 6.0 percent chromium, from 0 to about 1.0 percent niobium, from about 5.0 to about 6.6 percent aluminum, from 0 to about 1.0 percent titanium, from about 3.0 to about 7.5 percent tungsten, and wherein the sum of molybdenum plus chromium plus niobium is from about 2.15 to about 9.0 percent, and wherein the sum of aluminum plus titanium plus tungsten is from about 8.0 to about 15.1 percent, balance nickel and incidental impurities. The use of the present invention is not limited to these preferred alloys, and has broader applicability.

As shown in Figures 4-5, there is a first protective layer 54 overlying the first region 40 of the surface 52 of the substrate 50. The first protective layer has a first-protective-layer aluminum content at least as great as the substrate aluminum content. The first protective layer 54 preferably has a composition with a first-protective-layer aluminum content at least 3 atomic percent greater than the substrate aluminum content. For example, if the substrate aluminum content is 14 atomic percent, the first protective layer 54 preferably has at least 17 atomic percent aluminum. An upper surface of the first protective layer 54 oxidizes to produce a protective aluminum oxide scale (not shown), which inhibits the further oxidation of the surface 52 of the substrate 50.

The first protective layer 54 may be a diffusion aluminide that initially includes only aluminum and elements diffused into the first protective layer 54 from the substrate 50, or is a modified diffusion aluminide that initially includes other elements such as platinum, chromium, silicon, zirconium, or hafnium. In the simple diffusion aluminide, aluminum is deposited onto the surface 52 and diffused into the surface 52 and interdiffused with the elements of the substrate 50. The modified diffusion aluminide may be formed by depositing a layer of another element, such as platinum, onto the surface 52, and then depositing the aluminum layer (either pure aluminum or doped with a modifying element) overlying the layer of the other element. The layers are interdiffused with the base metal of the substrate. In these cases, the aluminum-containing first protective layer 54 may contain a modifying element such as hafnium, yttrium, zirconium, chromium, or silicon, or combinations thereof. Diffusion aluminide coatings that may be used are described in US Patent 6,607,611, whose disclosure is incorporated by reference.

The first protective layer 54 may instead be an MCrAlX overlay coating, which is also described in the '611 patent. The terminology "MCrAlX" is a shorthand term of art for a variety of families of overlay protective layers 34 that may be employed as environmental coatings or bond coats in thermal barrier coating systems. In this and other forms, M refers to nickel, cobalt, iron, and combinations thereof. In some of these protective layers, the chromium may be omitted. The X denotes elements such as hafnium, zirconium, yttrium, tantalum, rhenium, platinum, silicon, titanium, boron, carbon, and combinations thereof. Specific compositions are known in the art. Some examples of MCrAIX compositions include NiAICrZr and NiAlZr, whose disclosure is incorporated by reference), but this listing of examples is not to be taken as limiting.

As shown in Figure 5, there may be an optional ceramic thermal barrier coating 56 overlying and contacting the first protective layer 54. The ceramic thermal barrier coating 56 is preferably from about 75 to about 400 micrometers thick, most preferably about 125 to 250 micrometers thick. The ceramic thermal barrier coating 56 is typically yttria-stabilized zirconia, which is zirconium oxide containing from about 3 to about 12 weight percent, preferably from about 4 to about 8 weight percent, of yttrium oxide. Other operable ceramic materials may be used as well. The ceramic thermal barrier coating 42 may be deposited by any operable technique, such as electron beam physical vapor deposition or plasma spray.

As depicted in Figures 6-7, a second protective layer 58 overlies and contacts the second region 42 of the surface 52 of the substrate 50 different from and laterally separated from the first region 40. The second protective layer 58 has a composition having at least about 60 percent by weight of an element selected from the group consisting of platinum, rhodium, palladium, and combinations thereof. The second protective layer 58 is preferably from about 10 micrometers to about 100 micrometers thick. The second protective layer 58 may further include other elements than platinum, rhodium, and palladium, such as not more than 40 percent by weight of iridium, nickel, chromium, aluminum, zirconium, hafnium, tantalum, rhenium, or ruthenium, or combinations thereof.

The second protective layer 58 is mechanically stronger than the first protective layer 54. Consequently, it is more resistant to the rumpling and roughening of the second protective layer 58 than would otherwise occur during service in the second region 42. The second protective layer 58 is, however, more expensive and heavier than the first protective layer 54. Consequently, it is preferred to limit its use to only those areas, such as the second region 42, where the potential for damage during service to the protective coating is the greatest.

The second protective layer 58 is deposited by any operable approach, but is preferably deposited by electrodeposition. For a platinum-based second protective layer 58, for example, the deposition is preferably accomplished by placing a platinum-containing solution into a deposition tank and depositing platinum from the solution onto the substrate 50. An operable platinum-containing aqueous solution is Pt(NH₃)₄HPO₄ having a concentration of about 4-20 grams per liter of platinum. The voltage/current source is operated at about 1/2-10 amperes per square foot of facing article surface. The electrodeposition is performed at a temperature of 190-200°F.

Figure 7 depicts a further embodiment of the protective system in the second region 42. In this case, there is an optional ceramic thermal barrier coating 60 overlying and contacting the second protective layer 58. The ceramic thermal barrier coating 60 is otherwise comparable in character and function to the ceramic thermal barrier coating 56 that overlies the first protective layer 54, and the prior discussion of the ceramic thermal barrier coating 56 is incorporated here.

Figure 7 also depicts an optional diffusion-barrier layer 62 between the surface 52 of the substrate 50 and the second protective layer 58. The diffusion-barrier layer 62 is preferably a refractory pure metal or alloy. Examples of suitable materials for the diffusion-barrier layer 62 include rhenium, iridium, tungsten, and ruthenium, and combinations thereof. The diffusion-barrier layer 62 is preferably from about 3 to about 25 micrometers thick. The diffusion-barrier layer 62 has a low diffusion rate for elements found in the substrate 50 and which would otherwise diffuse into and dilute the second protective layer 58, and for elements found in the second protective layer 58 and which would otherwise diffuse out of the second protective layer 58 and into the substrate 50, also resulting in dilution of the second protective layer 58. The diffusion-barrier layer 62 thus inhibits the diffusion of elements from the second protective layer 58 into the substrate 50, and the diffusion of elements from the substrate 50 into the second protective layer 58.

The present approach uses the relatively expensive second protective layer 58 only in the second region 42 where it is needed, and where alternatives such as the first protective layer 54 do not provide sufficient protection because they tend to fail prematurely in the more aggressive environment experienced in the second region 42.

## Claims

1. A protected article (20) comprising:
a substrate (50) having a surface (52) and a substrate (50) aluminum content;
a first protective layer (54) overlying a first region (40) of the surface (52) of the substrate (50), wherein the first protective layer (54) has a composition having a first-protective-layer aluminum content at least 3 atomic percent greater than the substrate (50) aluminum content; and
a second protective layer (58) overlying a second region (42) of the surface (52) of the substrate (50) different from the first region (40), wherein the second protective layer (58) has a composition having at least about 60 percent by weight of an element selected from the group consisting of platinum, rhodium, palladium, and combinations thereof.

2. The protected article (20) of claim 1, wherein the first protective layer (54) is a diffusion aluminide layer.

3. The protected article (20) of claim 1, wherein the first protective layer (54) is an aluminum-containing overlay layer.

4. The protected article (20) of claim 1, further including
a ceramic thermal barrier coating (56, 60) overlying at least some of the first protective layer (54) or the second protective layer (58).

5. The protected article (20) of claim 1, wherein the substrate (50) is a nickel-base alloy.

6. The protected article (20) of claim 1, further including
a diffusion-barrier layer (62) between the surface (52) of the substrate (50) and the second protective layer (58).

7. The protected article (20) of claim 1, further including
a diffusion-barrier layer (62) between the surface (52) of the substrate (50) and the second protective layer (58), wherein the diffusion-barrier layer (62) comprises at least about 50 percent by weight of an element selected from the group consisting of rhenium, iridium, ruthenium, tungsten, and combinations thereof.

8. The protected article (20) of claim 1, wherein the substrate (50) is in the form of an airfoil (22), and wherein the second region (42) is a trailing edge (30), a leading edge (32), or a tip (34).

9. The protected article (20) of claim 1, wherein the composition of the second protective layer (58) further includes not more than 40 percent by weight of an element selected from the group consisting of iridium, nickel, chromium, aluminum, zirconium, hafnium, tantalum, rhenium, or ruthenium, and combinations thereof.

10. The protected article (20) of claim 1, wherein the second protective layer (58) further includes an alloying element other than platinum, rhodium, and palladium.
